# EUROPEAN PATENT APPLICATION

(11) **EP 4 350 665 A1**
(43) Date of publication of application: **10.04.2024**
(21) Application number: 22810912.0
(22) Date of filing: 08.03.2022
(51) Int. Cl.: G08G 3/02, G01S 19/14, G01S 13/937

(54) **SHIP MONITORING DEVICE, SHIP MONITORING METHOD, AND PROGRAM**

(30) Priority: 26.05.2021 JP 2021088608
(71) Applicant: Furuno Electric Co., Ltd., Nishinomiya-City, Hyogo 662-8580 (JP)
(72) Inventor: NAKAGAWA, Kazuya, Nishinomiya-City, Hyogo 6628580 (JP); FUJIOKA, Daisuke, Nishinomiya-City, Hyogo 6628580 (JP)
(74) Representative: Müller Hoffmann & Partner
(86) International application number: PCT/JP2022/009935
(87) International publication number: WO 2022/249631

(57) **Abstract**

The present disclosure provides a ship monitoring device which makes it easier to grasp a relationship between a ship object and a collision risk area. The ship monitoring device includes a specification accepting part, a first data acquiring part, a second data acquiring part, a risk area calculating part, and a display controlling part. The specification accepting part accepts a specification of a position in an image displayed on a display unit. The first data acquiring part acquires first ship data indicative of a position and a velocity of a first ship. The second data acquiring part acquires a plurality of second ship data indicative of positions and velocities of a plurality of second ships. The risk area calculating part calculates a collision risk area where a risk of the first ship colliding each of the second ships becomes more than a given value, based on the first ship data and the plurality of second ship data.

The display controlling part displays a plurality of ship objects indicative of the plurality of second ships, and the collision risk area disposed at corresponding positions in the image, and when a specification of the collision risk area is accepted, displays the ship object corresponding to the specified collision risk area so as to be discriminated from other ship objects.

## Description

### TECHNICAL FIELD

The present disclosure relates to a ship monitoring device, a ship monitoring method, and a program.

### BACKGROUND ART

Patent Document 1 discloses a technique for displaying, in a PPI (Plan Position Indicator) radar image, an image of other ships which exist around a ship concerned, together with a hazardous area where a danger of a collision with another ship may occur if the ship concerned enters.

### [Reference Document(s) of Conventional Art]

### [Patent Document]

[Patent Document 1] JP2000-128073A

### DESCRIPTION OF THE DISCLOSURE

### [Problem(s) to be Solved by the Disclosure]

Meanwhile, since a ship object indicative of another ship is often displayed separately from a collision risk area indicative of a risk of a collision with the another ship, it is difficult to grasp to which ship object the collision risk area is related, when a plurality of ship objects are displayed in the image.

The present disclosure is made in view of the problem described above, and one main purpose thereof is to provide a ship monitoring device, a ship monitoring method, and a program, which make it easier to grasp a relationship between a ship object and a collision risk area.

### [Summary of the Disclosure]

In order to solve the above-described problem, a ship monitoring device according to one aspect of the present disclosure includes a specification accepting part, a first data acquiring part, a second data acquiring part, a risk area calculating part, and a display controlling part. The specification accepting part accepts a specification of a position in an image displayed on a display unit. The first data acquiring part acquires first ship data indicative of a position and a velocity of a first ship. The second data acquiring part acquires a plurality of second ship data indicative of positions and velocities of a plurality of second ships. The risk area calculating part calculates a collision risk area where a risk of the first ship colliding each of the second ships becomes more than a given value, based on the first ship data and the plurality of second ship data. The display controlling part displays a plurality of ship objects indicative of the plurality of second ships, and the collision risk area disposed at corresponding positions in the image, and when a specification of the collision risk area is accepted, displays the ship object corresponding to the specified collision risk area so as to be discriminated from other ship objects. According to this configuration, it becomes easier to grasp the relationship between the ship object and the collision risk area.

In the above-described aspect, the display controlling part may perform the discriminating indication by displaying an information indication object including ship information so as to be associated with the ship object corresponding to the specified collision risk area. According to this configuration, it becomes easier to identify the ship object corresponding to the specified collision risk area, and it becomes possible to grasp the ship information.

In the above-described aspect, the display controlling part may perform the discriminating indication by using a different display mode of the ship object corresponding to the specified collision risk area from other ship objects. According to this configuration, it becomes easier to identify the ship object corresponding to the specified collision risk area.

In the above-described aspect, the display controlling part may perform one of the discriminating indication of the ship object corresponding to the collision risk area, and given processing accompanying specification of another object, that is determined beforehand, when a position at which the collision risk area overlaps with the another object is specified. According to this configuration, it becomes possible to prevent a processing conflict.

In the above-described aspect, the display controlling part may perform given processing accompanying specification of another object, without performing the discriminating indication of the ship object corresponding to the collision risk area, when a position at which the collision risk area overlaps with the another object is specified. According to this configuration, it becomes possible to prioritize the specification of another object rather than the collision risk area which can be displayed in a comparatively larger area and can also be specified at other positions.

In the above-described aspect, the another object may be the ship object. The given processing accompanying the specification of the another object may be processing to display an information indication object including ship information so as to be associated with the specified ship object. According to this configuration, it becomes possible to prevent a processing conflict when a position where the collision risk area and the ship object overlap is specified.

In the above-described aspect, the display controlling part may display in the image an echo object indicative of an area where an echo intensity is more than a given value, based on echo data generated by a radar mounted on the first ship. The another object may be the echo object, and the given processing accompanying the specification of the another object may be processing to register the specified echo object as a tracking target. According to this configuration, it becomes possible to prevent a processing conflict when a position where the collision risk area and the echo object overlap is specified.

In the above-described aspect, the display controlling part may perform the discriminating indication of the ship object corresponding to the collision risk area when a position at which the collision risk area overlaps with another object is specified in a first specifying mode, and perform given processing accompanying specification of the another object when a position at which the collision risk area overlaps with the another object is specified in a second specifying mode. According to this configuration, it becomes possible to perform both processings by changing the specifying mode.

In the above-described aspect, when a position at which a plurality of the collision risk areas overlap with each other is specified, the display controlling part may discriminatingly display one of the plurality of ship objects that is determined based on a degree of a collision risk, a distance from the specified position, a distance from the first ship, or a degree of interference with traveling of the first ship. According to this configuration, it becomes possible to discriminatingly display one ship object determined based on a given condition.

In the above-described aspect, when a position at which a plurality of the collision risk areas overlap with each other is specified, the display controlling part may discriminatingly display the plurality of ship objects corresponding to the plurality of specified collision risk areas. According to this configuration, it becomes possible to discriminatingly display all ship objects related.

In the above-described aspect, the first data may include a position of the first ship detected by a GNSS (Global Navigation Satellite System) receiver mounted on the first ship. Further, the second data may include a position and a velocity of the second ship that are detected by a radar mounted on the first ship. Further, the second data may include a position and a velocity of the second ship that are detected by an AIS (Automatic Identification System) mounted on the first ship.

Further, a ship monitoring method according to another aspect of the present disclosure includes generating, by a first data generating part, first ship data indicative of a position and a velocity of a first ship, generating, by a second data generating part, a plurality of second ship data indicative of positions and velocities of a plurality of second ships, calculating a collision risk area where a risk of the first ship colliding each of the second ships becomes more than a given value, based on the first ship data and the plurality of second ship data, displaying, by a display unit, an image where a plurality of ship objects indicative of the plurality of second ships, and the collision risk area are disposed at corresponding positions, and, when the collision risk area is specified, displaying the ship object corresponding to the specified collision risk area so as to be discriminated from other ship objects. According to this configuration, it becomes easier to grasp the relationship between the ship object and the collision risk area.

Further, a program according to another aspect of the present disclosure causes a computer to execute processing which includes acquiring first ship data indicative of a position and a velocity of a first ship, acquiring a plurality of second ship data indicative of positions and velocities of a plurality of second ships, calculating a collision risk area where a risk of the first ship colliding each of the second ships becomes more than a given value, based on the first ship data and the plurality of second ship data, displaying on a display unit a plurality of ship objects indicative of the plurality of second ships, and the collision risk area disposed at corresponding positions in an image, and, when the collision risk area is specified, displaying the ship object corresponding to the specified collision risk area so as to be discriminated from other ship objects. According to this configuration, it becomes easier to grasp the relationship between the ship object and the collision risk area.

### BRIEF DESCRIPTION OF DRAWINGS

Fig. 1 is a view illustrating one example of a configuration of a ship monitoring system.
Fig. 2 is a view illustrating one example of an other-ships management database.
Fig. 3 is a view illustrating one example of a configuration of a ship monitoring device.
Fig. 4 is a view illustrating one example of a calculation of a collision risk.
Fig. 5 is a view illustrating one example of an image for indication.
Fig. 6 is a view illustrating one example of a procedure of a ship monitoring method.
Fig. 7 is a view illustrating one example of the image for indication.
Fig. 8 is a view illustrating one example of the image for indication.
Fig. 9 is a view illustrating one example of processing details.
Fig. 10 is a view illustrating one example of the processing details.
Fig. 11 is a view illustrating one example of the image for indication.

### MODE FOR CARRYING OUT THE DISCLOSURE

Hereinafter, one embodiment of the present disclosure is described with reference to the drawings.

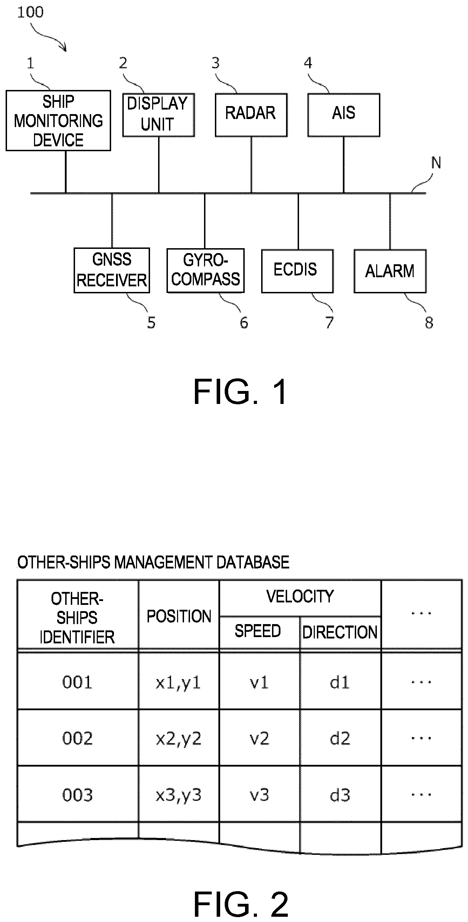

Fig. 1 is a block diagram illustrating one example of a configuration of a ship monitoring system 100. A ship monitoring method may be realized in the ship monitoring system 100. The ship monitoring system 100 may be a system which is mounted on a ship and monitors other ships which exist around the ship.

The ship on which the ship monitoring system 100 is mounted is one example of a first ship, and is referred to as "the ship" in the following description. Further, ship(s) which exists around "the ship" is one example of second ship(s), and is referred to as "another ship" or "other ships" in the following description.

Further, in the following description, a "velocity" is a vector quantity (so-called "ship velocity vector") indicative of a speed and a direction, and a "speed" is a scalar quantity.

The ship monitoring system 100 may include a ship monitoring device 1, a display unit 2, a radar 3, an AIS 4, a GNSS receiver 5, a gyrocompass 6, an ECDIS 7, and an alarm 8. These apparatuses may be connected, for example, with a network N, such as a LAN, so that mutual network communications are possible.

The ship monitoring device 1 may be a computer including a CPU, a RAM, a ROM, a nonvolatile memory, and an input/output interface. The CPU of the ship monitoring device 1 may perform information processing according to a program loaded to the RAM from the ROM or the nonvolatile memory.

The program may be supplied, for example, via an information storage medium, such as an optical disc or a memory card, or may be supplied, for example, via a communication network, such as the Internet or the LAN.

The display unit 2 may be a display device with a touch sensor, for example. The touch sensor may detect an instructed position in a screen which is instructed by a finger etc. The instructed position may be inputted not only by the touch sensor but also by a trackball etc.

The radar 3 may transmit a radio wave around the ship, receive a reflection wave thereof, and generate echo data based on a reception signal. Further, the radar 3 may discriminate a target object from the echo data, and generate Target-object Tracking data (TT data) indicative of a position and a velocity of the target object.

The AIS (Automatic Identification System) 4 may receive AIS data from other ship(s) or land controls which exist around the ship. A VDES (VHF Data Exchange System) may also be used, instead of the AIS. The AIS data may include a position, a velocity, etc. of another ship.

The GNSS receiver 5 may detect the position of the ship based on the radio waves received from a GNSS (Global Navigation Satellite System). The gyrocompass 6 may detect a direction (heading or bearing) of the ship. A GPS compass may also be used, instead of the gyrocompass.

The ECDIS (Electronic Chart Display and Information System) 7 may acquire the position of the ship from the GNSS receiver 5, and display the position of the ship on an electronic nautical chart. Further, the ECDIS 7 may also display a scheduled route of the ship on the electronic nautical chart. A GNSS plotter may also be used, instead of the ECDIS.

The alarm 8 may issue an alert when there is a risk of the ship colliding with another ship. For example, the alarm 8 may issue the alert by indication, or may issue the alert by sound or light. The alert by indication may be performed by the display unit 2. That is, the display unit 2 may also serve as the alarm 8.

Although in this embodiment the ship monitoring device 1 is an independent device, it may be integrated with another device, such as the ECDIS 7. That is, the functional parts of the ship monitoring device 1 may be realized by other devices.

Further, although the display unit 2 is also an independent device, a display unit of another device, such as the ECDIS 7, may be used as the display unit 2 which displays an image for indication generated by the ship monitoring device 1.

In this embodiment, the GNSS receiver 5 and the ECDIS 7 are examples of a first data generating part which generates "the-ship data" indicative of a position and a velocity of the ship. In detail, the GNSS receiver 5 may detect the position of the ship, and the ECDIS 7 may detect the velocity of the ship based on a temporal change of the position of the ship.

Alternatively, the velocity of the ship may be detected based on the direction of the ship detected by the gyrocompass 6, and a speed of the ship detected by a ship speed meter (not illustrated).

Further, the radar 3 or the AIS 4 is one example of a second data generating part, which generates "other-ships data" indicative of a position and a velocity of another ship. In detail, the TT data generated by the radar 3 may correspond to "other-ships data." The AIS data generated by the AIS 4 may also correspond to "other-ships data."

Fig. 2 is a view illustrating one example of other-ships management database established in the memory of the ship monitoring device 1. Other-ships data generated by the radar 3 or the AIS 4 may be registered into other-ships management database.

Other-ships management database may include fields, such as an "other-ships identifier," a "position," a "speed," and a "direction." Note that the position and the direction of another ship which are detected by the radar 3 may be converted into a coordinate system which is the same as the GNSS.

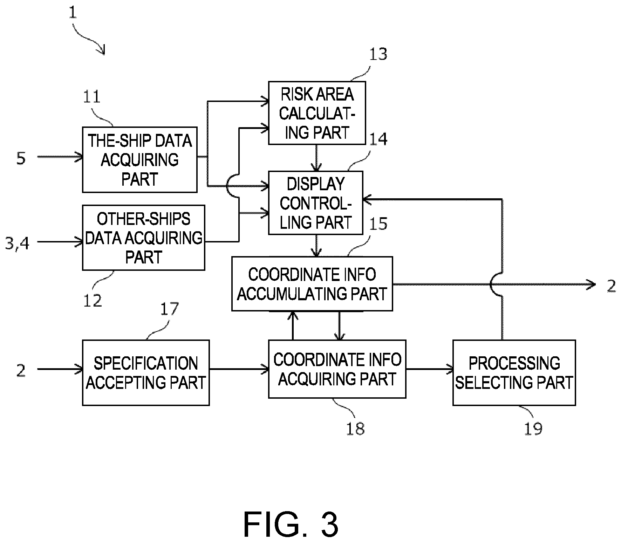

Fig. 3 is a view illustrating one example of a configuration of the ship monitoring device 1 according to this embodiment. The ship monitoring device 1 may include a the-ship data acquiring part 11, an other-ships data acquiring part 12, a risk area calculating part 13, a display controlling part 14, a coordinate information accumulating part 15, a specification accepting part 17, a coordinate information acquiring part 18, and a processing selecting part 19.

These functional parts may be realized by the CPU of the ship monitoring device 1 performing information processing according to the program. The coordinate information accumulating part 15 may be stored in the memory of the ship monitoring device 1 as an area holding the image for indication which is displayed on the display 2.

The-ship data acquiring part 11 may acquire the-ship data indicative of the position and the velocity of the ship from the GNSS receiver 5 etc. The-ship data acquiring part 11 is one example of a first data acquiring part, and the-ship data is one example of first ship data.

Other-ships data acquiring part 12 may acquire other-ships data indicative of the position and the velocity of another ship from the radar 3 or the AIS 4. Other-ships data acquiring part 12 is one example of a second data acquiring part, and other-ships data is one example of second ship data.

The risk area calculating part 13 may calculate a risk of the ship colliding with each of other ships based on the-ship data and a plurality of other-ships data, and calculate a collision risk area where the risk of a collision becomes more than a given value. The collision risk area may be an OZT (Obstacle Zone by Target), for example.

Although one example in which the OZT is calculated as the collision risk area will be described below, a PAD (Predict Area of Danger) or a DAC (Dangerous Area of Collision) may be used instead of the OZT, for example.

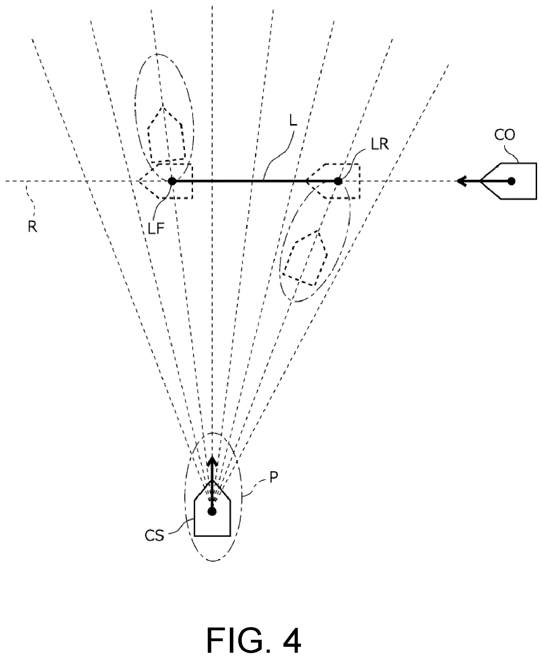

Fig. 4 is a view illustrating one example of the calculation of the collision risk. The risk area calculating part 13 may identify a risk area L where a risk of a ship CS colliding with another ship CO becomes more than a threshold, among an estimated course R of another ship CO, based on estimated positions of the ship CS and another ship CO at each timing, when assuming that the ship CS changes the course to an arbitrary direction and crosses the estimated course R of another ship CO.

The calculation of the estimated position of the ship CS may be performed under an assumption that the ship CS travels after it changed the course in an arbitrary direction at the current position, while maintaining the speed. That is, it may be assumed that the ship CS changes the direction of the-ship velocity vector to an arbitrary direction at a reference timing, while the magnitude of the-ship velocity vector is constant, and, after that, the ship CS continues the travel from the ship position at the reference timing in the fixed direction. Therefore, the estimated position of the ship CS at each timing may exist on a concentric circle centering on the ship position at the reference timing. The radius of the circle can be expressed by a product of a lapsed time from the reference timing and the magnitude of the-ship velocity vector.

The estimated position of the ship CS at each timing can be expressed by a plurality of concentric circles calculated at a plurality of discrete timings, respectively. Alternatively, the estimated position of the ship CS at each timing may be expressed by a formula of a circle taking the lapsed time from the reference timing into consideration.

Although in this embodiment the estimated position of the ship CS is calculated under the assumption that the speed of the ship CS is constant, the speed of the ship CS may be treated as a variable which changes with time. That is, the speed of the ship CS may not be constant, as long as the estimated position of the ship CS according to the lapsed time from the reference timing can be obtained. For example, the speed of the ship CS may gradually increase or decrease with progress of time.

The calculation of the estimated position of another ship CO may be performed under an assumption that another ship CO travels from the current position, while maintaining the velocity. That is, it may be assumed that another ship CO continues the travel from an another-ship position at a reference timing, where the magnitude and the direction of the another-ship velocity vector are constant. Therefore, the estimated position of another ship CO at each timing may exist on a straight line which is an extension of the another-ship velocity vector passing through the another-ship position at the reference timing.

The estimated positions of another ship CO at the timings can be expressed by a plurality of discrete points lined up on the straight line, which are calculated for the plurality of discrete timings. Alternatively, the estimated position of another ship CO at each timing may also be expressed by a linear function which passes through the another-ship position at the reference timing.

Although in this embodiment the estimated position of another ship CO is calculated under the assumption that the velocity of another ship CO is constant, at least one of the speed and the direction of another ship CO may be treated as a variable which varies with time. That is, the velocity of another ship CO may not be constant, as long as the estimated position of another ship CO according to the lapsed time from the reference timing can be obtained. For example, the speed of another ship CO may increase or decrease gradually with progress of time. Further, another ship CO may change the course to a given direction, or it may turn at a given ROT (Rate of Turn).

The risk area calculating part 13 may calculate a separated distance between the estimated position of the ship CS and the estimated position of another ship CO at each timing, and calculate the risk of a collision based on the separated distance and the ship size. As described above, since the estimated position of the ship CS at a certain timing can be expressed by a circle, the risk area calculating part 13 may calculate the separated distance by extracting the position nearest to the estimated position of another ship CO at this timing, from the circle indicative of the estimated positions of the ship CS at the certain timing.

The risk area calculating part 13 may identify the risk area L where the risk of a collision is more than the threshold, for example, while assuming that the risk of a collision is more than the threshold when a cautious area P set within the area of the ship CS or around the ship CS overlaps with a point indicative of the estimated position of another ship CO. For example, a rear end LR of the risk area L may become a position at which a front end of the cautious area P of the ship contacts the point indicative of the estimated position of another ship CO. The front end LF of the risk area L may become a position at which a rear end of the cautious area P of the ship contacts the point indicative of the estimated position of another ship CO.

Alternatively, the risk area calculating part 13 may determine that the risk of a collision is more than the threshold, for example, when the cautious area P set within the area of the ship CS or around the ship CS overlaps with a cautious area set within the area of another ship CO or around another ship CO. Alternatively, the risk area calculating part 13 may determine that the risk of a collision is more than the threshold, for example, when the separated distance between the point indicative of the estimated position of the ship CS and the point indicative of the estimated position of another ship CO is below a threshold.

Returning to Fig. 3, the display controlling part 14 may generate an indication image DM based on the-ship data acquired by the-ship data acquiring part 11, other-ships data acquired by other-ships data acquiring part 12, and the collision risk area calculated by the risk area calculating part 13, and output it to the coordinate information accumulating part 15. The indication image DM held in the coordinate information accumulating part 15 may be transmitted to the display unit 2 and may be displayed on the screen of the display unit 2.

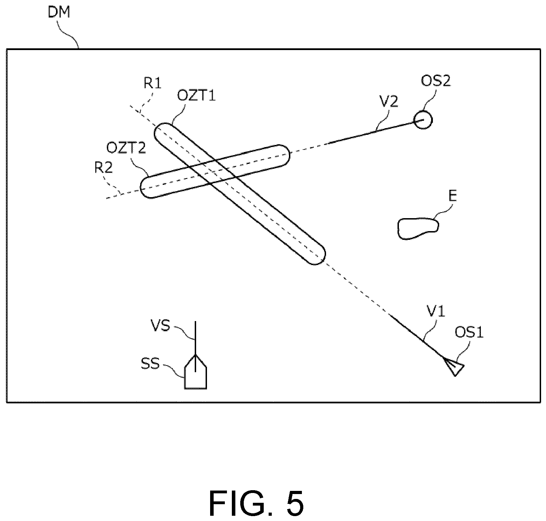

Fig. 5 is a view illustrating one example of the indication image DM. The indication image DM may be an image for indicating a spatial relationship between the ship and another ship. In the indication image DM, the-ship object SS indicative of the ship, and other-ships objects OS1 and OS2 indicative of other ships may be disposed at positions in the image corresponding to actual positions.

For example, among other-ships objects OS1 and OS2, other-ships object OS1 based on the AIS 4 may be displayed as a triangle, and other-ships object OS2 based on the radar 3 may be displayed as a circle. Further, vector lines VS, V1, and V2 indicative of the velocity vectors may be added to the-ship object SS and other-ships objects OS1 and OS2.

In the indication image DM, the estimated courses R1 and R2 of other ships calculated based on other-ships data may be displayed, and on the estimated courses R1 and R2, OZT1 and OZT2 which are calculated by the risk area calculating part 13 may be displayed as the collision risk areas. In the illustrated example, the estimated course R1 and the OZT1 may be associated with other-ships object OS1, and the estimated course R2 and the OZT2 may be associated with other-ships object OS2.

The OZT1 and OZT2 may be displayed in the risk area L which is identified by the risk area calculating part 13 (see Fig. 4). The OZT1 or OZT2 may have a shape extending in the same direction as the estimated course (R1 or R2) of another ship with a given width (for example, a rounded-end rectangular shape with semicircular ends). Alternatively, the OZT1 and the OZT2 may have an elliptical or polygonal shape, for example.

In the indication image DM, an echo object E based on the echo data acquired from the radar 3 may also be displayed. The echo object E may indicate an area where the echo intensity is more than a given value. That is, the echo object E may illustrate the existence of a target-object candidate, such as another ship. Alternatively, in the indication image DM, the scheduled route of the ship acquired from the ECDIS 7, and the nautical chart around the scheduled route may further be displayed.

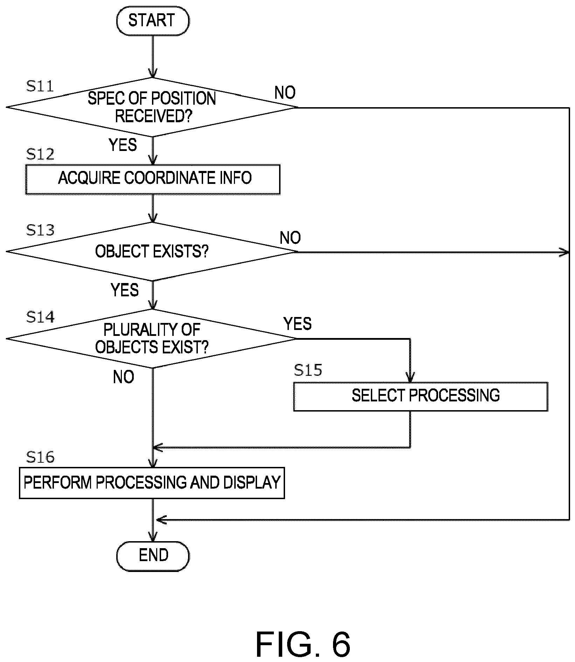

Fig. 6 is a view illustrating one example of a procedure of the ship monitoring method realized in the ship monitoring device 1. This drawing mainly illustrates processing when accepting a specification of a position in the indication image DM among processings performed by the ship monitoring device 1. This processing may be realized by a specification accepting part 17, a coordinate information acquiring part 18, a processing selecting part 19, and a display controlling part 14, which are included in the ship monitoring device 1 (see Fig. 3).

First, the specification accepting part 17 may determine whether it received the specification of the position in the indication image DM (S11). The position in the indication image DM can be expressed by two-dimensional coordinates. The specification of the position in the indication image DM may be performed by an input from a touch sensor provided to the display unit 2, or may be an input from a trackball or a mouse for operating a cursor in the screen of the display unit 2.

If the specification of the position in the indication image DM is accepted (S11: YES), the coordinate information acquiring part 18 may acquire coordinate information of the specified position in the indication image DM from the coordinate information accumulating part 15 (S12). The coordinate information may include information on the type of an object which exists at the specified position etc.

Next, the processing selecting part 19 may determine whether the object exists at the specified position (S13), and further determine whether there are a plurality of objects (S14). If only one object exists at the specified position (S13: YES and S14: NO), the display controlling part 14 may perform given processing accompanying the specification of the single object, and display it (S 16).

On the other hand, if a plurality of objects exist at the specified position (S13: YES and S14: YES), the processing selecting part 19 may select one processing defined beforehand from the given processings accompanying the specification of the plurality of objects (S15), and the display controlling part 14 may perform the selected processing, and display it (S16).

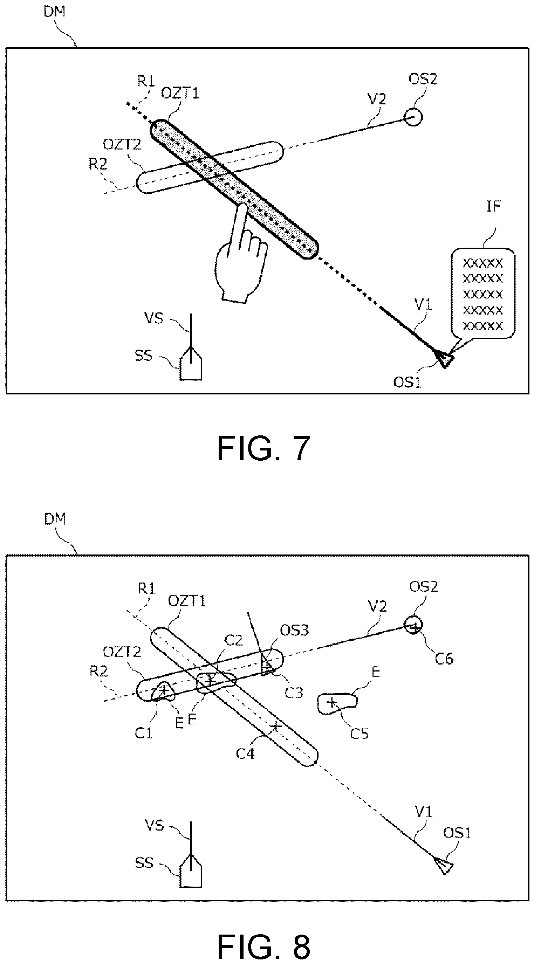

For example, as illustrated in Fig. 7, when one OZT1 is specified (that is, when only one OZT1 exists at the position specified), the display controlling part 14 may discriminatingly display other-ships object OS 1 corresponding to the specified OZT1.

In detail, the display controlling part 14 may display an information indication object IF including ship information so as to be associated with other-ships object OS 1 corresponding to the OZT1 specified. By using a display mode of other-ships object OS 1 which is different from the different other-ships object OS2, the other-ships object OS 1 can be discriminatingly displayed. Alternatively, the discriminating display may be performed only by one of the indication of the information indication object IF, and the change in the display mode of other-ships object OS1.

The information indication object IF may include information, such as an identification sign, a ship's name, a position, a course or heading, a speed, and a destination. These information may be extracted from the AIS data, for example.

The display mode of other-ships object OS1 may be changed, for example, to more noticeable color or brightness (so-called "highlighted indication"). Further, in addition to other-ships object OS1, the OZT1, the estimated course R1, and the vector line V1 may be similarly changed in the display mode to exaggerate the relevance of the specified OZT1 and other-ships object OS1.

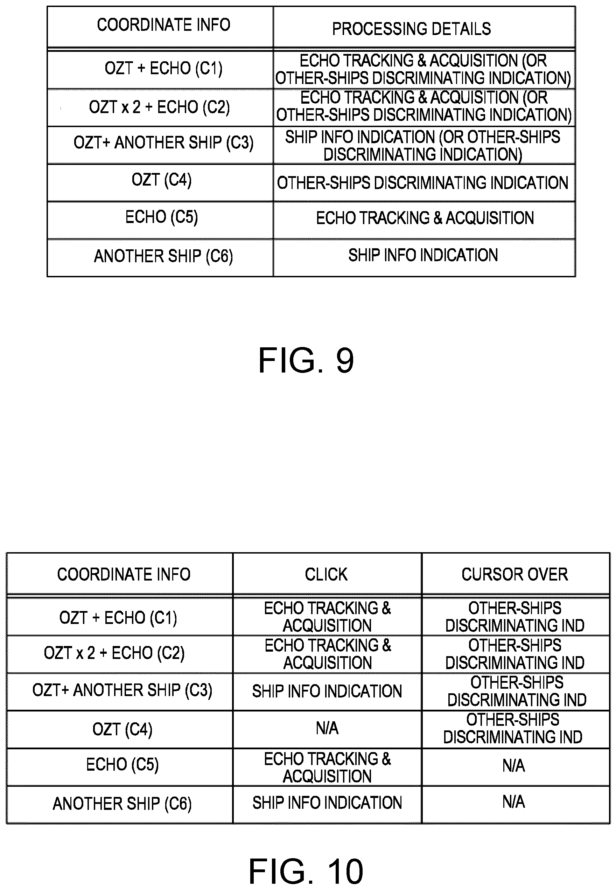

Figs. 8 and 9 are views illustrating one example of cursor positions C1-C6 in the indication image DM and processing details corresponding to the cursor positions C1-C6. The cursor positions C1-C3 indicate positions at which a plurality of objects are overlapped with each other. The cursor positions C4-C6 indicate positions at which only one object exists.

The cursor position C4 may be a position at which only OZT1 exists, and when this position is specified, the display controlling part 14 may perform an other-ships discriminating indication. That is, as illustrated in Fig. 7, the display controlling part 14 may discriminatingly display other-ships object OS1 corresponding to the specified OZT1.

The cursor position C5 may be a position at which only the echo object E exists, and when this position is specified, the display controlling part 14 may perform an echo tracking and acquisition. In detail, the display controlling part 14 may register the specified echo object E as a tracking target, and in connection with this, it may display a new circular other-ships object at the specified position.

The cursor position C6 may be a position at which only other-ships object OS2 exists, and when this position is specified, the display controlling part 14 may perform a ship information indication. In detail, the display controlling part 14 may display the information indication object IF (see Fig. 7) which includes the ship information so as to be associated with other-ships object OS2.

The cursor position C1 may be a position at which the echo object E overlaps with the OZT2, and when this position is specified, the display controlling part 14 may perform one of the echo tracking and acquisition, and the other-ships discriminating indication, which is determined beforehand. Although in this example the echo tracking and acquisition is performed, the other-ships discriminating indication may instead be performed. Alternatively, both the echo tracking and acquisition and the other-ships discriminating indication may be performed in parallel.

The cursor position C2 may be a position at which the echo object E, the OZT1, and the OZT2 overlap with each other, and when this position is specified, the display controlling part 14 may perform one of the echo tracking and acquisition and the other-ships discriminating indication, which is determined beforehand. Although in this example the echo tracking and acquisition is performed, the other-ships discriminating indication may instead be performed. The other-ships discriminating indication when the position at which the two OZT1 and OZT2 overlap with each other is specified will be described later. Alternatively, both the echo tracking and acquisition and the other-ships discriminating indication may be performed in parallel.

The cursor position C3 may be a position at which other-ships object OS3 and the OZT2 overlap with each other, and when this position is specified, the display controlling part 14 may perform one of the ship information indication and the other-ships discriminating indication, which is determined beforehand. Although in this example the ship information indication is performed, the other-ships discriminating indication may instead be performed. Alternatively, both the ship information indication and the other-ships discriminating indication may be performed in parallel.

Since the OZT1 and the OZT2 are often displayed in a larger area compared with the other-ships object OS3 or the echo object E, and it is easy to specify the position at which the other-ships object OS3 or the echo object E does not overlap, it may be preferred to prioritize the processing according to the other-ships object OS3 or the echo object E at the position where the OZT1 or the OZT2 overlaps with the other-ships object OS3 or the echo object E.

Instead of the example of Fig. 9, for example, as illustrated in Fig. 10, mutually different processings may be selected according to a mode of specifying the position. For example, at the cursor positions C1 and C2, the echo tracking and acquisition may be performed when clicked, and the other-ships discriminating indication may be performed when a cursor over is made. At the cursor position C3, the ship information indication may be performed when clicked, and the other-ships discriminating indication may be performed when a cursor over is made.

At the cursor position C4, nothing may be performed when clicked, but the other-ships discriminating indication may be performed when a cursor over is made. At the cursor position C5, the echo tracking and acquisition may be performed when clicked, and nothing may be performed when a cursor over is made. At the cursor position C6, the ship information indication may be performed when clicked, and nothing may be performed when a cursor over is made.

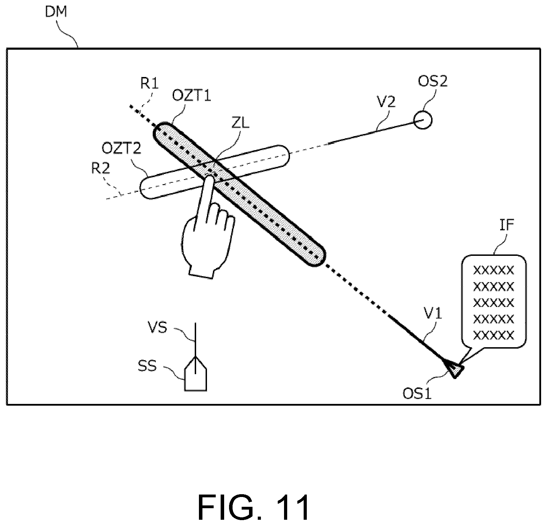

Note that, as illustrated in Fig. 11, when a position ZL at which a plurality of OZTs (OZT1 and OZT2) overlap is specified, the display controlling part 14 may discriminatingly display one other-ships object CS 1 determined from the plurality of other-ships objects OS1 and OS2 according to the degree of the collision risk, the distance from the specified position ZL, the distance from the-ship object SS, or a degree of interfering the traveling of the ship.

As for the degree of the collision risk, for example, one of other-ships objects OS1 and OS2 which is higher in the collision risk at the specified position ZL may be selected. The collision risk may be calculated so that it becomes higher as another ship CO gets closer to the ship CS, when performing the calculation illustrated in Fig. 4. Thus, the collision risk may become higher in a central part of the risk area L compared with both ends.

As for the distance from the specified position ZL, for example, one of other-ships objects OS1 and OS2 of which the distance from the specified position ZL is closer may be selected. Alternatively, one with a more distance from the specified position ZL (that is, one with a faster ship speed) may be selected. As for the distance from the-ship object SS, for example, one of other-ships objects OS1 and OS2 of which the distance from the-ship object SS is closer may be selected.

As for the degree of interfering the traveling of the ship, for example, one of other-ships objects OS 1 and OS2 with a higher occupancy ratio of the OZT1 and the OZT2 within the 360° range centering on the-ship object SS may be selected. Alternatively, this angle range may be a given angle range forward of the ship, instead of 360°.

Alternatively, the display controlling part 14 may discriminatingly display other-ships objects OS1 and OS2 corresponding to all the specified OZTs (OZT1 and OZT2), when the position ZL at which the plurality of OZTs (OZT1 and OZT2) overlap with each other is specified.

Although one embodiment of the present disclosure is described above, the present disclosure is not limited to the embodiment described above, and it is needless to say for the person skilled in the art that various changes are possible.

### DESCRIPTION OF REFERENCE CHARACTERS

1 Ship Monitoring Device, 2 Display Unit, 3 Radar, 4 AIS, 5 GNSS Receiver, 6 Gyrocompass, 7 ECDIS, 8 Alarm, 11 The-ship Data Acquiring Part, 12 Other-ships Data Acquiring Part, 13 Risk Area Calculating Part, 14 Display Controlling Part, 15 Coordinate Information Accumulating Part, 17 Specification Accepting Part, 18 Coordinate Information Acquiring Part, 19 Processing Selecting Part, 100 Ship Monitoring System

## Claims

1. A ship monitoring device, comprising:
a specification accepting part configured to accept a specification of a position in an image displayed on a display unit;
a first data acquiring part configured to acquire first ship data indicative of a position and a velocity of a first ship;
a second data acquiring part configured to acquire a plurality of second ship data indicative of positions and velocities of a plurality of second ships;
a risk area calculating part configured to calculate a collision risk area where a risk of the first ship colliding each of the second ships becomes more than a given value, based on the first ship data and the plurality of second ship data; and
a display controlling part configured to display a plurality of ship objects indicative of the plurality of second ships, and the collision risk area disposed at corresponding positions in the image, and when a specification of the collision risk area is accepted, display the ship object corresponding to the specified collision risk area so as to be discriminated from other ship objects.

2. The ship monitoring device of claim 1, wherein the display controlling part performs the discriminating indication by displaying an information indication object including ship information so as to be associated with the ship object corresponding to the specified collision risk area.

3. The ship monitoring device of claim 1, wherein the display controlling part performs the discriminating indication by using a different display mode of the ship object corresponding to the specified collision risk area from other ship objects.

4. The ship monitoring device of any one of claims 1 to 3, wherein the display controlling part performs one of the discriminating indication of the ship object corresponding to the collision risk area, and given processing accompanying specification of another object, when a position at which the collision risk area overlaps with the another object is specified.

5. The ship monitoring device of any one of claims 1 to 3, wherein the display controlling part performs given processing accompanying specification of another object, without performing the discriminating indication of the ship object corresponding to the collision risk area, when a position at which the collision risk area overlaps with the another object is specified.

6. The ship monitoring device of claim 4 or 5, wherein the another object is the ship object, and
wherein the given processing accompanying the specification of the another object is processing to display an information indication object including ship information so as to be associated with the specified ship object.

7. The ship monitoring device of claim 4 or 5, wherein the display controlling part displays in the image an echo object indicative of an area where an echo intensity is more than a given value, based on echo data generated by a radar mounted on the first ship,
wherein the another object is the echo object, and
wherein the given processing accompanying the specification of the another object is processing to register the specified echo object as a tracking target.

8. The ship monitoring device of any one of claims 1 to 3, wherein the display controlling part performs the discriminating indication of the ship object corresponding to the collision risk area when a position at which the collision risk area overlaps with another object is specified in a first specifying mode, and performs given processing accompanying specification of the another object when a position at which the collision risk area overlaps with the another object is specified in a second specifying mode.

9. The ship monitoring device of any one of claims 1 to 3, wherein, when a position at which a plurality of the collision risk areas overlap with each other is specified, the display controlling part discriminatingly displays one of the plurality of ship objects that is determined based on a degree of a collision risk, a distance from the specified position, a distance from the first ship, or a degree of interference with traveling of the first ship.

10. The ship monitoring device of any one of claims 1 to 3, wherein, when a position at which a plurality of the collision risk areas overlap with each other is specified, the display controlling part discriminatingly displays the plurality of ship objects corresponding to the plurality of specified collision risk areas.

11. The ship monitoring device of any one of claims 1 to 10, wherein the first ship data includes a position of the first ship detected by a GNSS (Global Navigation Satellite System) receiver mounted on the first ship.

12. The ship monitoring device of any one of claims 1 to 11, wherein the second ship data includes a position and a velocity of the second ship that are detected by a radar mounted on the first ship.

13. The ship monitoring device of any one of claims 1 to 12, wherein the second ship data includes a position and a velocity of the second ship that are detected by an AIS (Automatic Identification System) mounted on the first ship.

14. A ship monitoring method, comprising the steps of:
generating, by a first data generating part, first ship data indicative of a position and a velocity of a first ship;
generating, by a second data generating part, a plurality of second ship data indicative of positions and velocities of a plurality of second ships;
calculating a collision risk area where a risk of the first ship colliding each of the second ships becomes more than a given value, based on the first ship data and the plurality of second ship data;
displaying, by a display unit, an image where a plurality of ship objects indicative of the plurality of second ships, and the collision risk area are disposed at corresponding positions; and
when the collision risk area is specified, displaying the ship object corresponding to the specified collision risk area so as to be discriminated from other ship objects.

15. A program configured to cause a computer to execute processing, the processing comprising:
acquiring first ship data indicative of a position and a velocity of a first ship;
acquiring a plurality of second ship data indicative of positions and velocities of a plurality of second ships;
calculating a collision risk area where a risk of the first ship colliding each of the second ships becomes more than a given value, based on the first ship data and the plurality of second ship data;
displaying on a display unit a plurality of ship objects indicative of the plurality of second ships, and the collision risk area disposed at corresponding positions in an image; and
when the collision risk area is specified, displaying the ship object corresponding to the specified collision risk area so as to be discriminated from other ship objects.
